# EUROPEAN PATENT APPLICATION

(11) **EP 2 966 886 A1**
(43) Date of publication of application: **13.01.2016**
(21) Application number: 14176765.7
(22) Date of filing: 11.07.2014
(51) Int. Cl.: H04W 12/06, H04W 12/08

(54) **Location based equipment documentation access control**

(71) Applicant: General Electric Company, Schenectady, NY 12345 (US)
(72) Inventor: Alley, Daniel Milton, Salem, VA Virginia 24153-6422 (US); Moore, Christopher Todd, Salem, VA Virginia 24153-6422 (US)
(74) Representative: Illingworth-Law, William Illingworth

(57) **Abstract**

A document access control system 10 includes a location-based document reader 39 designed to provide a reading service, a location-based physical storage 35 located in a first location and designed to store a physical document, and a location-based document server 12. The location-based document server 12 stores an electronic document and delivers the electronic document to the location-based document reader 39. The location-based document reader 39 derives a second location, and provides access to the electronic document based on the first and the second locations.

## Description

### BACKGROUND

The subject matter disclosed herein relates to industrial documentation, and more particularly, to systems and methods for performing location based access control for industrial equipment documentation.

In certain industrial plants and factories, the machinery and equipment are accompanied by physical documents and operating manuals that contain the maintenance history, maintenance instructions, and operating instructions of the equipment. When a technician performs service on the equipment, he/she may refer to the documentation to repair or maintain the piece of equipment. Over the lifetime of a piece of equipment, the documentation corresponding to the piece of equipment may be updated by the company that publishes the operating manuals and by the technicians who keep a history of maintenance and repairs performed on the piece of equipment. Therefore, the documentation may be updated to ensure that the equipment is receiving proper service. However, physical documentation can be damaged, lost, or degrade over time, and may not reflect the most recent service instructions. Updating the physical documentation involves the labor and cost of delivering updated documentation to an equipment cabinet. Additionally, physical documentation may contain a company's proprietary information, meaning a loss of commercial advantage if the documentation falls into the wrong hands.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a location-based document reader that is designed to provide a reading service. The system also includes a location-based physical storage disposed in a first location and designed to store a physical document. Additionally, a location-based document server is configured to store an electronic document and to deliver the electronic document to the location-based document reader. The location-based document reader is designed to derive a second location and to provide an access to the electronic document based on the first and the second locations.

In a second embodiment, a non-transitory tangible machine-readable computer stores instructions configured to receive an electronic document from a location-based document server. The instructions also specify determining a first location of a location-based physical storage disposed in the first location and configured to store a physical document. Additionally, the instructions include instructions to provide a first access to the electronic document based on comparing the first location to the second location.

In a third embodiment, a method includes storing an electronic document and storing a physical document in a first location. The method also includes transmitting the electronic document to an electronic document reader, using the electronic document reader to derive a second location. The method includes providing read access to the electronic document based on comparing the first location to the second location.

### DRAWINGS

These and other features, aspects, and advantages of the present invention will become better understood when the following detailed description is read with reference to the accompanying drawings in which like characters represent like parts throughout the drawings, wherein:
FIG. 1 is a system-level diagram of a document access control system that can store and deliver documentation to a variety of locations according to an embodiment of the present approach;
FIG. 2 is a diagram illustrating various authentication methods according to an embodiment of the present approach; and
FIG. 3 is a flowchart of a method for providing access to a document according to an embodiment of the present approach.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and/or time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

In industrial and factory environments, machinery and equipment is maintained and repaired by technicians who may use physical documents for service history and for instructions useful in servicing the equipment. These documents may be, for example, physically chained to their corresponding equipment cabinet, locked inside the equipment cabinet, or made generally available in a central storage location such as a secure library at the plant or factory. However, the physical documentation may be damaged or lost, and can degrade over time. Additionally, physical documentation may be costly to update, and in some cases, due to error or negligence, may not reflect the most recent service instructions or service history. In the case that a piece of equipment breaks down or malfunctions, the use of incorrect or outdated documentation may not be desired. Also, a piece of equipment's physical documentation may contain proprietary information relating to the piece of equipment which could be intentionally or unintentionally compromised by a business competitor or an employee. It would be beneficial to enable access to electronic versions of the physical documents based on geographic locations of an electronic reading device, such as specific location (e.g., inside a secure area) and/or based on the distance of the electronic reading device from the physical document.

Accordingly, present embodiments include a system configured to provide access control to documentation. The system includes a location-based document reader that may be included in an electronic device. The location-based document reader may determine its geographical location and provide its location to a location-based document server configured to store electronic versions of physical documents. If the location of the location-based document reader is within an allowed range or area, the location-based document server may deliver an electronic version of a physical document via a communicative medium (e.g., the Internet, Wi-Fi, local area networks [LAN], wide area networks [WAN], personal area networks [PAN], Bluetooth, near-field communications [NFC]) and provide access to the document. In certain embodiments, additional identifiers such as a password, a barcode on the equipment cabinet, hardware or software tokens, or biometric authentication methods may be used, for example by the location-based document server, to provide an added layer of security. Accordingly, the location-based document server may determine the level of access provided to the location-based document reader based on one or more of the additional identifiers. In certain embodiments, once the location-based document reader is out of an allowed range of a specific document, or is outside of a certain geographic area, access to the document may be denied and the document may be deleted from the electronic device that comprises the location-based document reader, enabling greater document security. Accordingly, any entity, such as a manufacturer providing the physical documentation, may manage the location-based document server, and the documentation may be more reliably updated and quickly delivered to equipment cabinet sites.

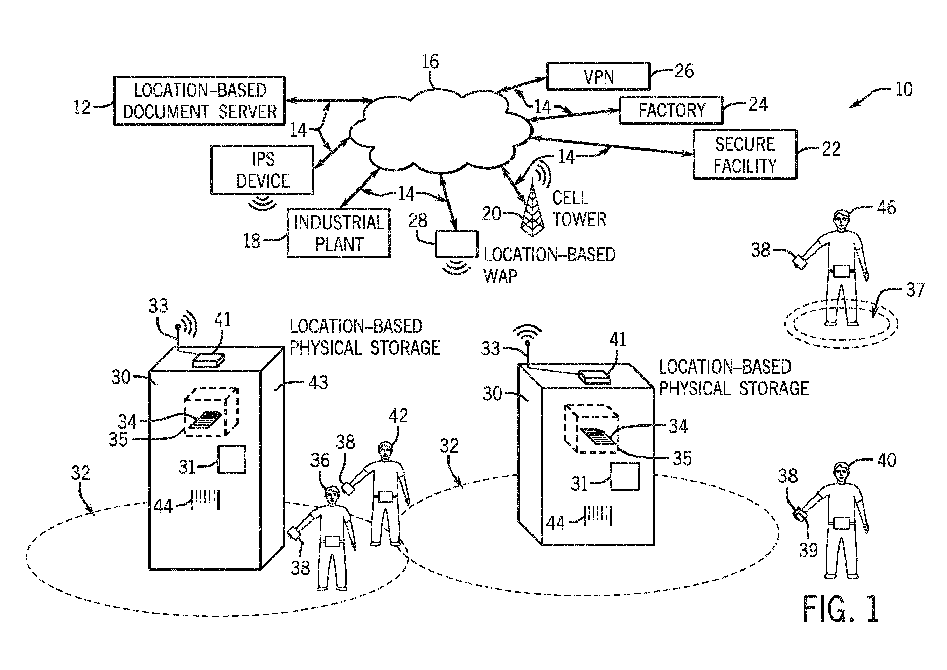

With the foregoing in mind, it may be useful to describe an embodiment of a document access control system, such as a document access control system 10 illustrated in FIG. 1. In the document access control system 10, a location-based document server 12 may store documentation, service and maintenance history, or a combination thereof, for one or more pieces of equipment. In some embodiments, the location-based document server 12 may include a secure data repository including a private key encryption system, a token authentication system, a biometric authentication system, a login authentication system, or a combination thereof. The location-based document server 12 may securely provide access to documentation, service history, logging data, design data, and other equipment or personnel data to one or more authorized locations by utilizing secure data links 14 over the "Cloud" 16 (e.g., Internet-based computing system). The secure data links 14 may securely transfer documentation data using security protocols such as secure shell file transfer protocol (SSH FTP), internet key exchange (IKE), secure socket layer (SSL), transport layer security (TLS), HTTPS (HTTP over TLS/SSL), IP security (IPSec), advanced encryption standard (AES), RSA, or a combination thereof.

As mentioned, the location-based document server 12 may provide access to documentation service history, and the like, to authorized locations, such as industrial plants 18, cell towers 20, secure facilities 22, factories 24, and virtual private networks 26. Physical locations such as industrial plants 18, secure facilities 22, and factories 24 may include one or more location-based wireless access points (WAPs) 28 that may utilize a wireless standard such as Wi-Fi (IEEE 802.11) to transfer documentation data within the authorized location. Remote locations accessible through techniques such as a VPN 26, may use some additional form of authorization information, such as a password, a hardware or software token, and/or biometric authentication before providing documentation access to a user.

In certain embodiments, an area such as an industrial plant or factory, may include one or more cabinets 30, such as a controller cabinet, a factory or industrial machinery equipment cabinets, aircraft parts cabinets, assembly line machinery cabinets, automobiles parts bins, computer and server systems storage systems, utility equipment storage systems, or any other storage system that may store documentation, such as documentation useful in repair and maintenance. The cabinets 30 may include a control panel 31 to enable technicians and/or operators to operate the cabinet 30. Each cabinet 30 may include a corresponding allowable location range 32 delineating a desired area in which documentation related to and/or stored in the cabinet 30 may be accessed. More specifically, the allowable location range 32 may include a distance from the cabinet 30 at which access to electronic documents associated with the cabinet 30 may be enabled. A person stepping outside of the allowable location range 32 may not have access to the digital documents, and a person stepping inside of the allowable location range 32 may be given access to the digital documents. Additionally or alternatively, a geographic region 37, such as the region 37 bounded by a set of geographic coordinates, or defined by a distance about a single geographic coordinate, may be used to provide access to electronic documents related to the cabinet 30 via the Cloud 16.

Additionally, each cabinet 30 may also include a communication system 33 for sending and receiving data. The communication system 33 may include a Global Positioning System (GPS), an indoor positioning system (IPS), a Wi-Fi system, a cell system, a Bluetooth system, an NFC system, or a combination thereof. In certain embodiments, each cabinet 30 may include physical documentation 34 stored in a location-based physical storage 35 that may be used additionally or alternatively to electronic documents stored in the location-based document server 12. The physical documentation 34 may be securely locked inside the physical storage 35 of the cabinet 30 with a physical key or any other locking mechanism (biometric lock, magnetic lock, voice-activated password lock).

In order to access electronic documentation related to the cabinet 30, a technician 36 may enter an allowable location range 32 with an electronic device 38 such as a tablet, a workstation, a personal digital assistant (PDA), a laptop, a cell phone, an e-reader, or a wearable computing device. The electronic device 38 may include one or more processors suitable for executing computer instructions as well as memory useful in storing the computer instructions. The electronic device 38 may include a location-based document reader 39 that may determine, for example, by using GPS, IPS, cellular methods, or other location determination methods, a location of the electronic device 38. The location-based document reader 39 may use communication circuitry on the electronic device 38 to transmit the location data of the electronic device 38 to a WAP 28, a cell tower 20, a router, or other wireless communication means, which may transmit the location data over a secure links 14 to the location-based document server 12. Non-wireless techniques, such as cables, may also be used. One or more processors included in the location-based document server 12 may process the location data to determine if the electronic device 38 is within an allowable location range 32. If so, the location-based document server 12 may utilize a WAP 28, a cell tower 20, or other wireless or non-wireless communication techniques to transmit documentation corresponding to the cabinet 30 to the location-based document reader. If a technician 40 is located outside of an allowable location range 32, the location-based document reader 39 may deny access to the documentation. In other embodiments, the location-based document reader 39 may delete the documentation once the technician 40 is located outside of an allowable location range 32. In yet other embodiments, the location-based document server 12 may receive location data from the location-based document reader 39 determine that the location-based document reader is out of an allowable location range 32, and deny access to documentation.

In certain embodiments, the location-based document server 12 may utilize a WAP 28, a cell tower 20, or other wireless or non-wireless communication techniques to transmit updated document data to the communication system 33 of each equipment cabinet 30. The document data may then be stored on a cabinet microcontroller 41. The cabinet microcontroller 41 may include a processor, a storage (e.g., physical storage and electronic data storage) to store documentation data for the cabinet, a memory to store instructions to be executed by the processor, and a wireless communication medium, such as Bluetooth or NFC. When the technician 36 with a location-based document reader 39 is determined to be within an allowable location range 32 of the cabinet 30, the cabinet microcontroller 41 may transmit document data to the electronic device 38 and allow access to document data with the location-based document reader 39. Due to the limited range of some wireless communication protocols, such as Bluetooth or NFC, the allowable location range 32 may be inside a range at which the communication protocol utilized by the cabinet storage device 41 can effectively transmit data. However, since other communications techniques may be used suitable for communication at long-ranges, the location range 32 may include a wide variety of distances, such as between 10-100 meters, 50-1000 meters, 1 kilometer - 10,000 kilometers.

In further other embodiments, the communication medium on the cabinet microcontroller 41 may be utilized to verify that a given electronic device 38 is within the allowable location range 32 so that the location-based document server 12 may transmit documentation data directly to the location-based document reader on the electronic device 38. For example, the cabinet microcontroller 41 may utilize the communication medium to transmit a key or password to an electronic device 38 within the allowable location range 32. The electronic device 38 may transmit the key or password to the location-based document server 12 to receive access to the cabinet 30 documentation. The key that may be transmitted by the cabinet microcontroller 41 may be utilized to decrypt encrypted documentation data. In certain embodiments, the cabinet microcontroller 41 may receive new keys or passwords from the location-based document server 12 at pre-determined time intervals, such as every 30 seconds or 1 minute. The updated keys and passwords may prevent users from accessing or decrypting documentation data once they are outside of an allowable location range 32.

A technician 36 located inside an allowable location range 32 may additionally receive write access from the location-based document server 12. The write access may enable a technician 36 to update service and maintenance history stored on the location-based document server 12 or the cabinet storage device 41. The various security access levels may be provided to enable only desired personnel to edit a document or to view a document. In certain embodiments, changes to documents on the location-based document server 12 or the cabinet storage device 41 may be authorized by an administrator or manager before the changes are updated on the location-based document server 12. Additionally, in certain embodiments, the location-based document server 12 or the cabinet storage device 41 may save previous versions of a specific document so that the document can be recovered in the event that the document was incorrectly updated or for any other reason.

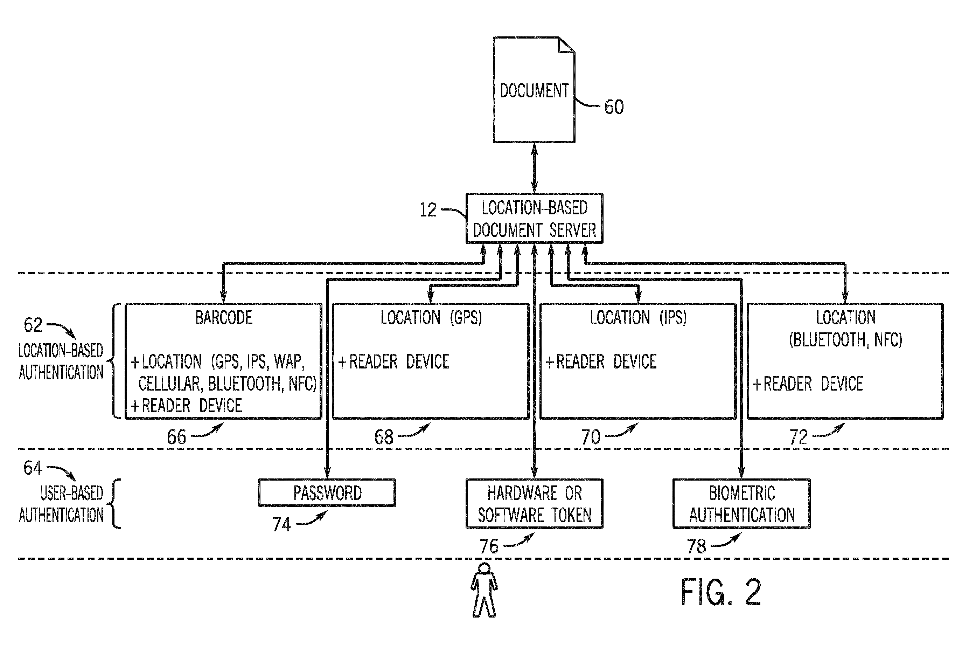

In certain instances, a technician 42 with an electronic device 38 including a location-based document reader 39 may be located in two or more allowable location ranges 32 of different equipment cabinets 30. That is, the technician 42 may be located in regions intersecting certain ranges 32. In some embodiments, the location-based document reader may receive read and/or write access to both cabinets 30 located in the intersecting ranges 32, while, in other embodiments, the location-based document reader 39 may receive read and/or write access from only one cabinet 43 or from neither of the cabinets 30. Further, in other embodiments, the location-based document reader may receive read and/or write access to a user-selected cabinet 30, or the cabinet 30 that is physically closer to the technician 42. Additionally, each cabinet 30 may include a barcode 44 that may be scanned by a barcode scanning device on the electronic device 38 to identify the cabinet 30 for which documentation access is requested. As will be further discussed in relation to FIG. 2, the barcode 44 may also be used as authentication data.

In addition to factories and industrial plants, documentation may also be accessed by individuals at authorized secure facilities 22. For example, an engineer 46 at an engineering office may need to update or reference equipment documentation stored on the location-based document server 12. The engineer 46 may receive access with the location-based document reader 39 at any location in the secure facility 22. In certain embodiments, the secure facility 22 may be a building or a portion of a building, and/or inside the geographic region 37. Additionally, the engineer 46 or other authorized personnel may gain access to documents on the location-based document server 12 through a VPN 26. An administrator of the location-based document server 12 may designate specific VPNs 26 to have read and/or write access to the location-based document server 12. The engineer 46 may access the VPN 26 with a login/password, and the VPN 26 may provide document read and/or write access to the location-based document reader operating on the electronic device 38.

In addition to providing simple read and write access to documentation on the location-based document server 12 as illustrated in FIG. 1, the document access control system 10 may utilize different forms of authentication to provide different levels of read and write access. FIG. 2 illustrates various embodiments of authentication methods that may be utilized to provide customized levels of access. The level of access of a particular document 60 stored on the location-based document server 12 may be determined by location-based authentication processes 62, user-based authentication processes 64, or a combination thereof. Each authentication process or technique may transmit authentication data to the location-based document server 12, and receive document access by way of the document access control system infrastructure illustrated in FIG. 1.

The location-based authentication processes 62 may combine location data with other forms of information to characterize the level of access a user may receive. For example, a barcode process 66 of location-based authentication may utilize a barcode 44 disposed on an equipment cabinet 30 as illustrated in FIG. 1 in conjunction with a location determined by the electronic device 38 to confirm the user is located in an authorized location to receive documentation and service history regarding the equipment cabinet 30. Similarly, a different barcode 44 may be given to engineers or other authorized personnel for use at a secure facility 22. The barcode 44 may be associated with the location of the secure facility 22 and an electronic device 38 scanning the barcode 44 may only receive access to documentation when the electronic device 38 is within an allowable location range 32 associated with the secure location 22. Additionally, the barcode 44 at the secure facility 22 may enable a different access level than the barcode 44 disposed on the cabinet 30 in the factory 24 or industrial plant 18. For example, the technician 36 at the factory 24 or industrial plant 18 may be allowed to access both operation manuals and service history for a specific cabinet 30, while an engineer at the secure facility 22, such as a research and development facility, may be allowed to access only the operation manuals.

Even when the electronic device 38 does not include a barcode scanning device, or when barcodes have not been installed on equipment, location-based authentication methods 62 may still be utilized to determine access levels to a document. For example, an administrator of the location-based document server 12 may determine and set a variety of allowable location ranges 32 that may each define a separate access level. Location-based authorization methods 62 may utilize GPS systems 68, IPS systems 70, cellular systems, Bluetooth or NFC systems 72, or a combination thereof to determine if a user utilizing the electronic device 38 is within a specific allowable location range 32. If a user with an electronic device 38 is within the specific allowable location range 32, the location-based authentication methods 62 may enable a level of document access based on the allowable location range 32. As an example, an engineer at the secure facility 22, such as an engineering office, may use the location-based document reader 39 in the electronic device 38 to access an operating manual for a given piece of equipment because the engineering office is designated as within the allowable location range 32. However, the technician 36 at the industrial plant 18 or factory 24 may enter the allowable location range 32 corresponding to the cabinet 30 and may receive access to read the operating manual as well as maintenance history relating to the cabinet 30, and, in some embodiments, may receive access to edit and update the maintenance history based on, for example, maintenance performed. In this way, the location-based authentication process 62 may provide customized levels of access to users that require different access levels to documentation stored on the location-based document server 12. Additionally, the location-based authentication method 62 may enable efficient deployment of location-based documentation access control. To enable location-based documentation access control for the industrial plant 18 or factory 24, the administrator of the location-based document server 12 may determine the allowable location ranges 32 of the industrial plant 18 or the factory 24, for example, by determining a distance from the cabinet 30, set the allowable location ranges 32 in the location-based document server 12, and assign access levels to each of the allowable location ranges 32. A user with an electronic device 38 that includes the location-based document reader may then enter an allowable location range 32 and receive a proper level of document access.

In addition to location-based authentication methods 62, access to electronic documents may be determined by utilizing user-based authentication methods 64. As previously mentioned, a user may enter a login/password 74 to receive more access to documentation relating to a piece of equipment. For example, a manager at an industrial plant 18 or factory 24 may enter a login/password 74 into a location-based document reader to receive document access outside of allowable location ranges 32, enabling the manager to review the maintenance history for several pieces of equipment without having to physically enter each allowable location range 32.

Additionally, certain electronic devices 38 may include a hardware or software token 76 that may enable different levels of document access. For example, an engineer may need to access documentation for several pieces of equipment while travelling. An electronic device 38 with the allowable hardware or software token 76 may be enabled to access the equipment documentation regardless of location. Also, the industrial plant 18 or factory 24 may have some electronic devices 38 that do not have hardware or software tokens 76 and some electronic devices 38 that do have hardware or software tokens 76. Managers at the industrial plant 18 or the factory 24 may receive electronic devices 38 with the hardware or software tokens 76 and may be enabled to access any documentation at any location, while technicians 36 at the industrial plant 18 or factory 24 may receive electronic devices 38 without the hardware or software tokens 76 and may only be enabled to access specific pieces of documentation when they are in an allowable location range 32.

In certain embodiments, the electronic device 38 containing the location-based document reader may utilize biometric authentication methods 78. The biometric authentication methods 78 may include voice recognition, retina scanning, fingerprint scanning, hand print recognition, signature recognition, or a combination thereof. The location-based document server 12 may store profiles for potential users that associate biometric data for a given user with a level of access for the user. For example, using biometric authentication methods 78, a manager in an industrial plant 18 or factory 24 may use any location-based document reader on an electronic device 38 that includes biometric identification equipment to access documentation for an equipment cabinet 30. It should be noted that the location-based authentication methods 62 and the user-based authentication methods 64 may be used alone or in combination with each other to achieve a desired level of access control and document security. Indeed, access to the server 12 may be provided by any combination of authentication processes 66, 68, 70, 72, 74, 76, and 78

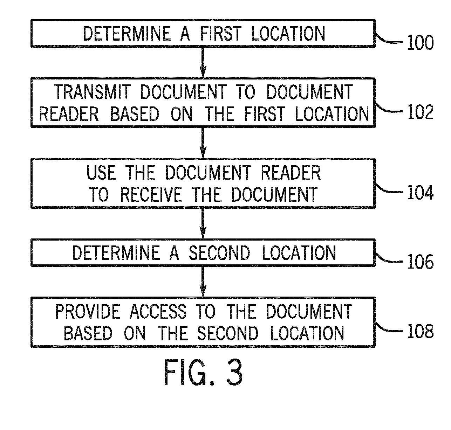

While FIG. 2 illustrates different forms of authentication that may be utilized by the location-based document server 12, FIG. 3 illustrates an embodiment of a process that the location-based document server 12 may utilize when using a location-based authentication method 62 to determine a level of access to documentation for a user. The location-based document server 12 may determine a first location, as represented by block 100. The first location may be the allowable location range 32 that defines where a user may access documentation stored on the location-based document server 12, the geographic location 37, or a combination thereof. The location-based document server 12 may store more than one allowable location range 32 and/or geographic location 37. Based on the first location, the location-based document server 12 may transmit a document 60 to a location-based document reader, and the location-based document reader may receive the document 60, as represented by blocks 102 and 104 respectively. Although the location-based document reader may have the document 60 stored at this point, it may be unable to read the document. The location-based document reader may be programmed to not open the document 60 at this time, or the document may be unable to be read for other reasons. For instance, the document may be encrypted or password-protected. Additionally, the location-based document server 12 may transmit more than one document 60 to the location-based document reader based on the first location. For example, based on a first location, the location-based document server 12 may transmit both the operating manual and the maintenance history for an equipment cabinet 30 to the location-based document reader, but at a later time, authentication data may determine which of the pieces of documentation will be able to be displayed.

As represented by block 106, the location-based document server 12 may determine a second location. The second location may refer to the physical location of the electronic device 38 that includes the location-based document reader and may be determined by the methods described in FIGS. 1 and 2. The location-based document server may also determine other authentication data such as the barcode 44 and the user-based authentication methods 64 illustrated in FIG. 2. Based on the second location, the location-based document server 12 may provide access to the one or more documents 60, as represented by block 108. As mentioned, the levels of access to a specific document 60 may be determined by the second location as well as other authentication methods.

Technical effects of the techniques described herein include a document access control system including a location-based document server used to store documentation data and communicate with a location-based document reader. Particularly, the location-based document reader determines and transmits its location to the location-based document server. The location-based document server determines if the location of the location-based document reader falls within an allowable location range. If so, the location-based document reader allows document access to the location-based document reader. The location-based document server may provide different levels of document access based on the location of the location-based document reader, and, in some embodiments, other authentication data. The method of document access control enables greater security and greater control over security for the proprietary documentation stored on the location-based document server. Additionally, the documentation stored on the location-based document server can be updated efficiently, ensuring that an engineer or technician has the most up-to-date copies of a piece of equipment's documentation.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system comprising:
   a location-based document reader configured to provide a reading service;
   a location-based physical storage disposed in a first location and configured to store a physical document; and
   a location-based document server configured to store an electronic document and to deliver the electronic document to the location-based document reader, wherein the location-based document reader is configured to derive a second location and to provide an access to the electronic document based on the first and the second locations.
2. The system of clause 1, wherein the location-based document reader is configured to deny the access if the second location does not intersect the first location.
3. The system of clause 1 or clause 2, wherein the location-based document reader is configured to derive the second location by using a positioning system, such as at least one of a Global Positioning System (GPS), an indoor positioning system (IPS), a location-aware wireless access point (WAP), a cell tower, a Bluetooth signal, a near field communication signal, or a combination thereof.
4. The system of any preceding clause, wherein the location-based document reader is included in an electronic device, such as at least one of a tablet, a workstation, a personal digital assistant, a laptop, a cell phone, an e-reader, or wearable computing device.
5. The system of any preceding clause, wherein the location-based physical storage comprises a cabinet having a physical key configured to lock the cabinet.
6. The system of any preceding clause, wherein the cabinet comprises a controller storage cabinet configured to store an industrial controller, and wherein the industrial controller is configured to control a process.
7. The system of any preceding clause, wherein the access comprises a read access and a write access, and wherein the location-based document reader is configured to provide the read access, the write access, or a combination thereof, to the electronic document based on the second location.
8. The system of any preceding clause, wherein the location-based document reader is configured to provide the read access, the write access, or a combination thereof, based on the second location and on a barcode, a user/password combination, a hardware token, a software token, a biometric authentication, or a combination thereof.
9. The system of any preceding clause, wherein the location-based document reader is configured to transmit a modified version of the electronic document to the location-based document server based on the second location, wherein the location-based document reader is configured to transmit the modified version of the electronic document to the location-based server based on the second location and on a barcode, a user/password combination, a hardware token, a software token, a biometric authentication, or a combination thereof.
10. The system of any preceding clause, wherein the location-based physical storage is stored in a factory, an industrial plant, a secure facility, or a combination thereof, and the first location comprises a section of the factory, the industrial plant, the secure facility, or the combination thereof.
11. The system of any preceding clause, wherein the location-based document reader is configured to allow the access to the electronic document if the second location is outside of the first location.
12. A non-transitory machine-readable computer medium storing instructions configured to:
   receive an electronic document from a location-based document server;
   determine a first location of a location-based physical storage disposed in the first location and configured to store a physical document; and
   provide a first access to the electronic document based on comparing the first location to the second location.
13. The non-transitory machine-readable computer medium of any preceding clause, wherein the electronic document contains substantially the same information as the physical document.
14. The non-transitory machine-readable computer medium of any preceding clause, comprising instructions configured to deny the first access to the electronic document if the first location is not inside of the second location.
15. The non-transitory machine-readable computer medium of any preceding clause, wherein the first access comprises a read access and a write access.
16. The non-transitory machine-readable computer medium of any preceding clause, comprising instructions configured to provide the write access to the electronic document if the first location is inside of the second location and the read access to the electronic document if the first location is outside of the second location.
17. A method comprising:
   storing an electronic document;
   storing a physical document in a first location;
   transmitting the electronic document to an electronic document reader;
   using the electronic document reader to derive a second location;
   providing read access to the electronic document based on comparing the first location to the second location.
18. The method of clause 17, wherein providing read access comprises providing read access to the electronic document if the second location is inside of the first location.
19. The method of clause 17 or clause 18, comprising deleting the electronic document from the electronic document reader if the second location is not inside of the first location.
20. The method of any of clauses 17 to 19, comprising providing write access to the electronic document based on using a user login/password combination, a hardware token, a software token, a biometric authentication, or a combination thereof.

## Claims

1. A system comprising:
a location-based document reader (39) configured to provide a reading service;
a location-based physical storage (35) disposed in a first location and configured to store a physical document; and
a location-based document server (12) configured to store an electronic document and to deliver the electronic document to the location-based document reader, wherein the location-based document reader is configured to derive a second location and to provide an access to the electronic document based on the first and the second locations.

2. The system of claim 1, wherein the location-based document reader is configured to deny the access if the second location does not intersect the first location.

3. The system of claim 1 or claim 2, wherein the location-based document reader is configured to derive the second location by using a positioning system, such as at least one of a Global Positioning System (GPS), an indoor positioning system (IPS), a location-aware wireless access point (WAP), a cell tower, a Bluetooth signal, a near field communication signal, or a combination thereof.

4. The system of any preceding claim, wherein the location-based document reader is included in an electronic device, such as at least one of a tablet, a workstation, a personal digital assistant, a laptop, a cell phone, an e-reader, or wearable computing device.

5. The system of any preceding claim, wherein the location-based physical storage comprises a cabinet having a physical key configured to lock the cabinet.

6. The system of any preceding claim, wherein the cabinet comprises a controller storage cabinet configured to store an industrial controller, and wherein the industrial controller is configured to control a process.

7. The system of any preceding claim, wherein the access comprises a read access and a write access, and wherein the location-based document reader is configured to provide the read access, the write access, or a combination thereof, to the electronic document based on the second location.

8. The system of any preceding claim, wherein the location-based document reader is configured to provide the read access, the write access, or a combination thereof, based on the second location and on a barcode, a user/password combination, a hardware token, a software token, a biometric authentication, or a combination thereof.

9. The system of any preceding claim, wherein the location-based document reader is configured to transmit a modified version of the electronic document to the location-based document server based on the second location, wherein the location-based document reader is configured to transmit the modified version of the electronic document to the location-based server based on the second location and on a barcode, a user/password combination, a hardware token, a software token, a biometric authentication, or a combination thereof.

10. The system of any preceding claim, wherein the location-based physical storage is stored in a factory, an industrial plant, a secure facility, or a combination thereof, and the first location comprises a section of the factory, the industrial plant, the secure facility, or the combination thereof.

11. The system of any preceding claim, wherein the location-based document reader is configured to allow the access to the electronic document if the second location is outside of the first location.

12. A non-transitory machine-readable computer medium storing instructions configured to:
receive an electronic document from a location-based document server;
determine a first location of a location-based physical storage disposed in the first location and configured to store a physical document; and
provide a first access to the electronic document based on comparing the first location to the second location.

13. A method comprising:
storing an electronic document;
storing a physical document in a first location;
transmitting the electronic document to an electronic document reader;
using the electronic document reader to derive a second location;
providing read access to the electronic document based on comparing the first location to the second location.

14. The method of claim 13, wherein providing read access comprises providing read access to the electronic document if the second location is inside of the first location.

15. The method of claim 13 or claim 14, comprising deleting the electronic document from the electronic document reader if the second location is not inside of the first location.
